# EUROPÄISCHE PATENTSCHRIFT

(11) **EP 2 064 151 B1**
(45) Veröffentlichungstag und Bekanntmachung des Hinweises auf die Patenterteilung: **19.10.2011**
(21) Anmeldenummer: 07819982.5
(22) Anmeldetag: 28.08.2007
(51) Int. Cl.: C01C 3/02

(54) **VERBESSERTES VERFAHREN ZUR HERSTELLUNG VON BLAUSÄURE**
IMPROVED METHOD FOR PRODUCING PRUSSIC ACID
PROCÉDÉ AMÉLIORÉ DE PRÉPARATION D'ACIDE CYANHYDRIQUE

(30) Priorität: 07.09.2006 EP 06120307
(43) Veröffentlichungstag der Anmeldung: 03.06.2009
(73) Patentinhaber: BASF SE, 67056 Ludwigshafen (DE)
(72) Erfinder: DECKERS, Andreas, 55234 Flomborn (DE); SCHNEIDER, Thomas, 67227 Frankenthal (DE)
(86) Internationale Anmeldenummer: PCT/EP2007/058923
(87) Internationale Veröffentlichungsnummer: WO 2008/028842

(56) Entgegenhaltungen:
- EP-A- 0 209 039
- WO-A-2004/050587
- WO-A-2006/027176
- DE-A1- 10 138 553
- DE-C- 973 173
- GB-A- 1 295 379
- US-A- 2 723 184

## Beschreibung

Die vorliegende Erfindung betrifft ein Verfahren zur Herstellung von Blausäure umfassend die katalytische Dehydratisierung von gasförmigem Formamid, wobei ein Produktgemisch erhalten wird, enthaltend Blausäure, Wasser, Formamid, Ammoniak, CO und Hochsieder, Trennung des Produktgemisches durch Kondensation eines Kondensats aus dem erhaltenen Produktgemisch enthaltend Wasser, Formamid, Hochsieder und gegebenenfalls Ammoniak und Blausäure, sowie die teilweise oder vollständige Rückführung des Kondensats in einen dem Reaktor nachgeschalteten Wärmetauscher.

Blausäure ist eine wichtige Grundchemikalie, die als Ausgangsprodukt zum Beispiel in zahlreichen organischen Synthesen wie der Herstellung von Methacrylsäureestern, Milchsäure und Metallcyaniden, als Polyamid-Vorstufe, zur Herstellung von pharmazeutischen und agrochemischen Produkten, im Bergbau und in der metallurgischen Industrie eingesetzt wird.

Ein wichtiges Verfahren zur industriellen Herstellung von Blausäure ist die thermische Dehydratisierung von Formamid im Vakuum, die nach der folgenden Gleichung (I) abläuft:

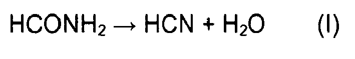

Diese Umsetzung ist von der Zersetzung des Formamids gemäß Gleichung (II) unter Bildung von Ammoniak und Kohlenmonoxid begleitet:

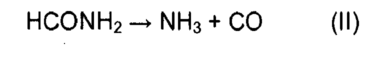

Das gebildete Ammoniak katalysiert die Polymerisation der gewünschten Blausäure und führt somit zu einer Beeinträchtigung der Qualität der Blausäure und einer Verringerung der Ausbeute an der gewünschten Blausäure.

Bei der Herstellung von Blausäure bildet sich im Reaktor Ruß, was durch die Zugabe von geringen Mengen Sauerstoff in Form von Luft, wie in EP-A 0 209 039 offenbart ist, unterdrückt werden kann. In EP-A 0 209 039 ist ein Verfahren zur thermolytischen Spaltung von Formamid an hochgesinterten Aluminiumoxid- oder Aluminiumoxid-Siliziumdioxid-Formkörpern oder an hochtemperatur-korrosionsfesten Chrom-Nickel-Edelstahlformkörpern offenbart. Der Formamid-Umsatz ist in diesem Verfahren nicht vollständig. Zur Erhöhung des Formamid-Gesamtumsatzes ist somit eine Abtrennung und Rückführung von nicht umgesetztem Rest-Formamid sinnvoll.

DE-A 101 38 553 betrifft ein Verfahren zur Herstellung von Blausäure durch katalytische Dehydratisierung von gasförmigem Formamid in Anwesenheit eines Katalysators enthaltend Eisen in Form von metallischem Eisen und/oder Eisenoxid. Insbesondere ist der Katalysator ausgewählt aus Packungen aus Stahl und Eisenoxiden auf einem Trägermaterial aus Aluminiumoxid.

In WO 2004/050587 ist ein Verfahren zur Herstellung von Blausäure durch katalytische Dehydratisierung von Formamid offenbart, wobei der Reaktor eine innere Reaktoroberfläche aus einem Stahl enthaltend Eisen sowie Chrom und Nickel aufweist. Bevorzugt enthält der in dem Verfahren gemäß WO 2004/050587 eingesetzte Reaktor keine zusätzlichen Einbauten.

WO 2006/027176 betrifft ein Verfahren zur Herstellung von Blausäure durch katalytische Dehydratisierung von gasförmigem Formamid, bei dem aus dem Produktgemisch der Dehydratisierung ein Formamid enthaltender Rückstrom abgetrennt und in die Dehydratisierung zurückgeführt wird, wobei der Rückstrom 5 bis 50 Gew.-% Wasser enthält. Bevorzugt wird gemäß WO 2006/027176 aus dem Produktgasgemisch der Dehydratisierung ein Gemisch aus Wasser, Formamid, Hochsiedern und gelösten Gasen als Kondensat 1 auskondensiert, aus dem Kondensat 1 ein Teil des Wassers und der gelösten Gase abgetrennt, wobei ein Kondensat 3 aus Wasser, Formamid und Hochsiedern erhalten wird, und der Formamid enthaltende Rückführstrom wird durch einfache Destillation aus dem Kondensat 3 abgetrennt.

Bei der Abtrennung von nicht umgesetztem Formamid sowie von Reaktionswasser wird das Rohgas abgekühlt und Formamid mit einem Teil des Wassers auskondensiert. Hierfür werden dem Reaktor nachgeschaltete Wärmetauscher, z.B. Rohrbündelwärmetauscher eingesetzt. An den Stellen, an denen kondensierte Phasen gebildet werden, kommt es immer wieder zu einer Ablagerung von Feststoffen, z.B. bestehend aus polymerer HCN. Als Folge hiervon muss in regelmäßigen Abständen der Prozess zur Herstellung von HCN unterbrochen werden und die belegten Apparate gereinigt werden. Dieser Zustand hat einen Betriebsstillstand zur Folge, der zu einem massiven wirtschaftlichen Schaden führt.

GB-1295379 beschreibt die katalylische Dehydratisierung von gasförmigen formamid mit nach folgender kondensation. Im kondensation wird ein kondensierten wässviger Blansäurestrom erhalten der teilweise durch Sprühdüsen auf den kondensor kopf gesprüht wird.

Aufgabe der vorliegenden Erfindung ist es daher, ein einfach durchzuführendes Verfahren zur Herstellung von Blausäure durch katalytische Dehydratisierung von Formamid bereitzustellen, welches durch eine hohe Verfügbarkeit und geringe Abstellzeiten gekennzeichnet ist.

Diese Aufgabe wird durch ein Verfahren zur Herstellung von Blausäure gelöst umfassend
i) katalytische Dehydratisierung von gasförmigem Formamid in einem Reaktor mit nachgeschaltetem Wärmetauscher mit Kondensationsflächen, wobei ein Produktgemisch erhalten wird, enthaltend Blausäure, Wasser, Formamid, Ammoniak, CO und Hochsieder;
ii) Teilkondensation einer flüssigen Phase, enthaltend Formamid und wassen und gegebenenfalls Ammoniak und Blansäure in geringer menge von 0,5 gewicht % unter erhalt eines gasförmigen produkt stroms, der Blansäure, wasser, Ammoniak und co enthält, aus dem Produktgemisch,
iii) kontinuierliche Rückführung eines Teils der auskondensierten Flüssigkeit und Zurückpumpen dieser auskondensierten Flüssigkeit auf die Kondensationsflächen des Wärmetauschers, wobei die gesamten kodensations flächen des nachgeschalteten Wärmetanschens ständing mit flüssigkeit benezit werden.

Dadurch erzielt man zwei Effekte: Einerseits wird das einströmende heiße Prozessgas abgekühlt (gequencht), zum Beispiel von etwa 450 °C auf etwa 250 °C, und andererseits wird durch die teilweise Rückführung der auskondensierten Flüssigkeit (Kondensat) auf die Kondensationsflächen des Wärmetauschers sich eventuell bildendes HCN-Polymerisat regelmäßig von den Wärmetauscherflächen abgespült. Ein Anbacken oder sogar Verstopfen des Reaktors durch Ablagerungen auf den Wärmetauscherflächen kann so mit Hilfe des erfindungsgemäßen Verfahrens verzögert bzw. fast vollständig verhindert werden.

Es ist bevorzugt, dass das rückgeführte Kondensat möglichst gleichmäßig auf den Kondensationsflächen des Wärmetauschers verteilt wird. Dies kann dadurch erreicht werden, dass das Kondensat an einer oder mehreren Stellen auf die Kondensationsfläche geführt wird. Dabei erfolgt das Führen des Kondensats auf die Kondensationsflächen des Wärmetauschers im Allgemeinen dadurch, dass das Kondensat mit Hilfe von Pumpen auf die Kondensationsflächen des Wärmetauschers gepumpt wird. In einer Ausführungsform des erfindungsgemäßen Verfahrens wird das Kondensat auf die Eintrittsstelle des Wärmetauschers gepumpt. Die bevorzugte Zugabestelle ist so gewählt, dass die Teile des Wärmetauschers ständig umspült sind, an den der Phasenübergang Gas/Flüssigkeit stattfindet. Die Verteilung des Kondensats auf den Kondensationsflächen des Wärmetauschers erfolgt in einer bevorzugten Ausführungsform des erfindungsgemäßen Verfahrens mittels einer oder mehreren, im Allgemeinen an verschiedenen Stellen angeordneten, Düsen. Dadurch wird das rückgeführte Kondensat fein und gleichmäßig verteilt.

Die gesamten Kondensationsflächen des nachgeschalteten Wärmetauscher werden ständig mit Flüssigkeit benetzt. Das Verhältnis von zurückgeführtem Kondensat und Rohgas (in Masseanteilen) beträgt im Allgemeinen 1:2 bis 1:20, bevorzugt 1:3 bis 1:15 und besonders bevorzugt 1:3 bis 1:10.

### Schritt i)

In Schritt i) des erfindungsgemäßen Verfahrens erfolgt die katalytische Dehydratisierung von gasförmigem Formamid.

Als Katalysatoren sind alle bekannten zur Dehydratisierung von gasförmigem Formamid geeigneten Katalysatoren geeignet. Beispiele für geeignete Katalysatoren sind hochgesinterte Formkörper aufgebaut aus 50 bis 100 Gew.-%, bevorzugt 85 bis 95 Gew.-% Aluminiumoxid und 0 bis 50 Gew.-%, bevorzugt 5 bis 15 Gew.-% Siliziumdioxid sowie Chrom-Nickel-Edelstahl-Formkörper, wie in EP-A 0 209 039 beschrieben, Packungen enthaltend Stahl und/oder Eisenoxid auf einem Trägermaterial, wie in DE-A 101 38 553 beschrieben. Des Weiteren kann die Wandinnenfläche des Reaktors aus Stahl gebildet sein, zum Beispiel aus V2A-Stahl, und als Katalysator dienen. Dabei ist es nicht erforderlich, dass der Reaktor weitere Einbauten enthält. Ein geeigneter Reaktor, worin die Reaktorwand als Katalysator dient, ist zum Beispiel ein leerer Rohrreaktor aus V2A-Stahl, wobei die heiße Rohrwandoberfläche als Katalysator dient. Geeignete Reaktoren sind in WO 2004/050587 beschrieben.

In Schritt (i) des erfindungsgemäßen Verfahrens kann das gasförmige Formamid in Anwesenheit von Luftsauerstoff umgesetzt werden. Üblicherweise werden 0 bis 10 mol% Luftsauerstoff, bezogen auf die eingesetzte Formamidmenge, bevorzugt 0,1 bis 10 mol%, besonders bevorzugt 0,5 bis 3 mol% Luftsauerstoff eingesetzt.

Die Temperatur in Schritt i) des erfindungsgemäßen Verfahrens beträgt im Allgemeinen 350 bis 650 °C, bevorzugt 400 bis 600 °C, besonders bevorzugt 450 bis 550 °C, ganz besonders bevorzugt 500 bis 550 °C.

Schritt i) des erfindungsgemäßen Verfahrens wird im Allgemeinen bei vermindertem Druck, unterhalb von Normaldruck, durchgeführt, bevorzugt bei einem Druck von 70 bis 350 mbar, besonders bevorzugt 80 bis 200 mbar.

Schritt i) des erfindungsgemäßen Verfahrens kann grundsätzlich in jedem geeigneten Reaktor durchgeführt werden. Bevorzugt wird ein Rohrreaktor, besonders bevorzugt ein Mehrrohrreaktor eingesetzt. Geeignete Rohrreaktoren sind dem Fachmann bekannt.

Üblicherweise wird das in Schritt i) eingesetzte gasförmige Formamid dadurch erhalten, dass flüssiges Formamid in dem Wärmetauscher bevorzugt einem Rohrbündelwärmetauscher, Feinfilmverdampfer oder Dünnschichtverdampfer, unter vermindertem Druck von im Allgemeinen 1 bis 350 mbar, bevorzugt 80 bis 250 mbar und bei Temperaturen von im Allgemeinen 100 bis 300 °C, bevorzugt 130 bis 220 °C verdampft wird. Der Formamid-Dampf wird anschließend in dem eigentlichen Dehydratisierungsreaktor oder in einem zusätzlichen vorgeschalteten Wärmetauscher auf die Reaktionstemperatur gebracht.

Die mittlere Verweilzeit am Katalysator beträgt in Schritt i) des erfindungsgemäßen Verfahrens im Allgemeinen 0,01 bis 0,5 s, bevorzugt 0,05 bis 0,2 s.

In Schritt i) wird ein Produktgemisch erhalten enthaltend Blausäure, Wasser, nicht umgesetztes Formamid, Ammoniak, CO und Hochsieder. Dabei sind unter Hochsiedern im Sinne der vorliegenden Anmeldung insbesondere Polymere wie polymere HCN und Diformamid und Salze, z.B. Ammoniumcyanid, zu verstehen.

Geeignete nachgeschaltete Wärmetauscher sind Wärmetauscher, die zur Kondensation einer Flüssigkeit enthaltend Formamid und Wasser aus dem in Schritt i) erhaltenen Produktgemisch geeignet sind. Beispiele für geeignete Wärmetauscher sind Rohrbündelwärmetauscher, Platenwärmetauscher, Thermobleche etc.

### Schritt ii)

Im Anschluss an die katalytische Dehydratisierung in Schritt i) erfolgt die Kondensation einer Flüssigkeit enthaltend Formamid und Wasser (Kondensat) aus dem vorstehend genannten Produktgemisches. Das Kondensat enthält im Allgemeinen Wasser, Formamid, Hochsieder und gegebenenfalls Ammoniak und Blausäure. Ammoniak und Blausäure liegen dabei in dem Kondensat im Allgemeinen lediglich in geringen Mengen von < 0,5 Gew.-% vor. Des Weiteren wird bei der Kondensation ein gasförmiger Produktstrom erhalten, der im Allgemeinen Blausäure, Wasser, Ammoniak und CO enthält.

Die Menge an kondensierter Flüssigkeit beträgt bei der Teilkondensation (bezogen auf den Gesamtmassenstrom an Prozessgas) im Allgemeinen 1 bis 20 Gew.%, bevorzugt 3 bis 15 Gew.-% und besonders bevorzugt 5 bis 10 Gew.-%.

Die Kondensation in Schritt ii) des erfindungsgemäßen Verfahrens erfolgt dabei bevorzugt in der Form, dass das in Schritt i) gebildete Produktgemisch, das im Allgemeinen eine Temperatur von 400 bis 600 °C aufweist, auf 10 bis 150 °C abgekühlt wird. Diese Abkühlung erfolgt im Allgemeinen in einem oder mehreren Wärmetauschern oder in einer Quenchkolonne.

Der gasförmige Produktstrom enthaltend im Allgemeinen Blausäure, Wasser, Ammoniak und CO dient zur Gewinnung der gewünschten Blausäure. In einer bevorzugten Ausführungsform wird dabei Ammoniak durch Extraktion, zum Beispiel durch Absorption in Schwefelsäure, entfernt und Blausäure anschließend als Kondensat 2 erhalten. Die Blausäure kann anschließend zum Beispiel durch eine fraktionierte Destillation weiter gereinigt werden.

### Schritt iii)

In Schritt iii) erfolgt erfindungsgemäß die kontinuierliche Rückführung eines Teils der auskondensierten Flüssigkeit und Zurückpumpen dieser auskondensierten Flüssigkeit auf die Kondensationsflächen des Wärmetauschers.

Im Allgemeinen wird ein solcher Teil der auskondensierten Flüssigkeit zurückgeführt, dass das Verhältnis von zurückgeführtem Kondensat und Rohgas (in Masseanteilen) 1:2 bis 1:20, bevorzugt 1:3 bis 1:15 und besonders bevorzugt 1:3 bis 1:10 beträgt.

Mit dem erfindungsgemäßen Verfahren können lange Standzeiten von im Allgemeinen mindestens sechs Monaten erreicht werden. Somit dient das erfindungsgemäße Verfahren dazu, die Reinigungskosten zu vermindern und die Stillstandzeiten einer Anlage zur Herstellung von Blausäure zu verkürzen. Die nachfolgenden Beispiele erläutern die Erfindung zusätzlich.

### Beispiele

### Beispiel 1 (erfindungsgemäß)

Ein 4,5 m langes Reaktionsrohr aus 1.4541-Stahl (V2A-Stahl) mit einem Innendurchmesser von 10 mm und einem Außendurchmesser von 12 mm wird elektrisch auf eine konstante Außentemperatur von 520 °C gebracht. Das Reaktionsrohr besitzt eine spezifische Oberfläche von 400 m²/m³. Der Innendruck im Rohr beträgt 150 mbar abs. und wird durch eine Vakuumpumpe erzeugt.

In einem vorgeschalteten Wärmetauscher (Verdampfer), der ebenfalls unter dem Reaktionsdruck steht, werden 1,3 kg/h Formamid bei 155 °C verdampft und auf den Kopf des Reaktionsrohres geleitet. Zusätzlich wird an der Verbindung zwischen dem Wärmetauscher und dem Reaktionsrohr 13 NL Luft/h eingespeist.

Am Ende des Reaktionsrohres befindet sich ein Rohrbündelwärmetauscher, der das Prozessgas einstufig auf 80 °C abkühlt. Die Kühlwassertemperatur beträgt 23 °C.

Bei dieser Vorgehensweise entstehen pro Stunde 0,11 kg eines Kondensats 1, enthaltend 67 Gew.-% Formamid, 32 Gew.-% Wasser, 0,1 Gew.-% NH₃ und ca. 0,3 Gew.-% HCN. Dieses Kondensat 1 wird mit einer Umlaufpumpe (0,5 kg/h) auf die Eintrittsstelle des Wärmetauschers gepumpt. Nach einer kontinuierlichen Laufzeit von 14 Tagen wird die Apparatur geöffnet und es kann kein Polymerbelag im Wärmetauscher gefunden werden. Alle Rohre sind frei.

### Beispiel 2 (Vergleichsversuch)

Ein 4,5 m langes Reaktionsrohr aus 1.4541-Stahl (V2A-Stahl) mit einem Innendurchmesser von 10 mm und einem Außendurchmesser von 12 mm wird elektrisch auf eine konstante Außentemperatur von 520 °C gebracht. Das Reaktionsrohr besitzt eine spezifische Oberfläche von 400 m²/m³. Der Innendruck im Rohr beträgt 150 mbar abs..und wird durch eine Vakuumpumpe erzeugt.

In einem vorgeschalteten Wärmetauscher, der ebenfalls unter dem Reaktionsdruck steht, werden 1,3 kg/h Formamid bei 155 °C verdampft und auf den Kopf des Reaktionsrohres geleitet. Zusätzlich wird an der Verbindung zwischen Verdampfer und Reaktionsrohr 13 NL Luft/h eingespeist.

Am Ende des Reaktionsrohres befindet sich ein Rohrbündelwärmetauscher, der das Prozessgas einstufig auf 80 °C abkühlt. Die Kühlwassertemperatur beträgt 23 °C.

Eine Rückführung von Kondensat wie im erfindungsgemäßen Beispiel erfolgt nicht. Nach einer kontinuierlichen Laufzeit von 9 Tagen musste die Apparatur geöffnet werden, da ein HCN-Polymerbelag den Wärmetauscher verstopfte.

## Patentansprüche

1. Verfahren zur Herstellung von Blausäure umfassend
i) katalytische Dehydratisierung von gasförmigem Formamid in einem Reaktor mit nachgeschaltetem Wärmetauscher mit Kondensationsflächen, wobei ein Produktgemisch erhalten wird, enthaltend Blausäure, Wasser, Formamid, Ammoniak, CO und Hochsieder;
ii) Teilkondensation einer flüssigen Phase enthaltend Formamid und Wasser und gegebenenfalls Ammoniak und Blausäure in geringen Mengen von < 0,5 Gew.-% unter Erhalt eines gasförmigen Produktstroms, der Blausäure, Wasser, Ammoniak und CO enthält, aus dem erhaltenen Produktgemisch;
iii) kontinuierliche Rückführung eines Teils der auskondensierten Flüssigkeit und Zurückpumpen der auskondensierten Flüssigkeit auf die Kondensationsflächen des Wärmetauschers, wobei die gesamten Kondensationsflächen des nachgeschalteten Wärmetauschers ständig mit Flüssigkeit benetzt sind.

2. Verfahren nach Anspruch 1, **dadurch gekennzeichnet, dass** die kondensierte Flüssigkeit an einer oder mehreren Stellen auf die Kondensationsflächen des Wärmetauschers geführt wird.

3. Verfahren nach einem der Ansprüche 1 oder 2, **dadurch gekennzeichnet, dass** als Katalysatoren in Schritt i) hochgesinterte Formkörper aufgebaut aus 50 bis 100 Gew.-% Aluminiumoxid und 0 bis 50 Gew.-% Siliziumdioxid, Chrom-Nickel-Edelstahl-Formkörper, Packungen enthaltend Stahl und/oder Eisenoxid auf einem Trägermaterial eingesetzt werden und/oder die Wandinnenfläche des Reaktors aus Stahl gebildet ist und als Katalysator dient.

4. Verfahren nach einem der Ansprüche 1 bis 3, **dadurch gekennzeichnet, dass** Schritt i) in Anwesenheit von Luftsauerstoff durchgeführt wird.

5. Verfahren nach einem der Ansprüche 1 bis 4, **dadurch gekennzeichnet, dass** Schritt i) bei einer Temperatur von 350 bis 650 °C durchgeführt wird.

6. Verfahren nach einem der Ansprüche 1 bis 5, **dadurch gekennzeichnet, dass** Schritt i) bei einem Druck von 70 bis 350 mbar durchgeführt wird.

7. Verfahren nach einem der Ansprüche 1 bis 6, **dadurch gekennzeichnet, dass** die Kondensation in Schritt ii) durch Abkühlung des in Schritt i) gebildeten Produktgemisches auf 10 bis 150 °C erfolgt.

## Claims

1. A process for preparing hydrocyanic acid, which comprises
i) catalytic dehydration of gaseous formamide in a reactor having a downstream heat exchanger having condensation surfaces to give a product mixture comprising hydrocyanic acid, water, formamide, ammonia, CO and high boilers;
ii) partial condensation of a liquid phase comprising formamide and water and possibly ammonia and hydrocyanic acid in small amounts of < 0.5% by weight to give a gaseous product stream which comprises hydrocyanic acid, water, ammonia and CO, from the product mixture obtained;
iii) continuous recirculation of part of the condensed-out liquid and pumping of this condensed-out liquid back onto the condensation surfaces of the heat exchanger, with the entire condensation surfaces of the downstream heat exchanger being continually wetted with liquid.

2. The process according to claim 1, wherein the condensed liquid is fed onto the condensation surfaces of the heat exchanger at one or more points.

3. The process according to claim 1 or 2, wherein highly sintered shaped bodies made up of from 50 to 100% by weight of aluminum oxide and from 0 to 50% by weight of silicon dioxide, shaped chromium-nickel stainless steel bodies, packings comprising steel and/or iron oxide on a support material are used as catalysts in step i) and/or the inside of the wall of the reactor is made of steel and serves as catalyst.

4. The process according to any of claims 1 to 3, wherein step i) is carried out in the presence of atmospheric oxygen.

5. The process according to any of claims 1 to 4, wherein step i) is carried out at a temperature of from 350 to 650°C.

6. The process according to any of claims 1 to 5, wherein step i) is carried out at a pressure of from 70 to 350 mbar.

7. The process according to any of claims 1 to 6, wherein the condensation in step ii) is effected by cooling the product mixture formed in step i) to from 10 to 150°C.

## Revendications

1. Procédé de fabrication d'acide prussique, comprenant
i) la déshydratation catalytique de formamide gazeux dans un réacteur avec un échangeur de chaleur en aval comprenant des surfaces de condensation, un mélange de produits étant obtenu, qui contient de l'acide prussique, de l'eau, du formamide, de l'ammoniac, du CO et des composés de point d'ébullition élevé ;
ii) la condensation partielle d'une phase liquide contenant du formamide et de l'eau et éventuellement de l'ammoniac et de l'acide prussique en petites quantités < 0,5 % en poids pour obtenir un courant de produits gazeux, qui contient de l'acide prussique, de l'eau, de l'ammoniac et du CO, à partir du mélange de produits obtenu ;
iii) le recyclage continu d'une partie du liquide condensé et le pompage du liquide condensé sur les surfaces de condensation de l'échangeur de chaleur, l'ensemble des surfaces de condensation de l'échangeur de chaleur en aval étant constamment mouillées avec du liquide.

2. Procédé selon la revendication 1, **caractérisé en ce que** le liquide condensé est conduit à un ou plusieurs emplacements sur les surfaces de condensation de l'échangeur de chaleur.

3. Procédé selon l'une quelconque des revendications 1 ou 2, **caractérisé en ce que** des corps moulés hautement frittés constitués de 50 à 100 % en poids d'oxyde d'aluminium et 0 à 50 % en poids de dioxyde de silicium, des corps moulés de chrome-nickel-acier inoxydable, des garnissages contenant de l'acier et/ou de l'oxyde de fer sur un matériau support sont utilisés en tant que catalyseurs à l'étape i) et/ou la surface intérieure de la paroi du réacteur est formée en acier et sert de catalyseur.

4. Procédé selon l'une quelconque des revendications 1 à 3, **caractérisé en ce que** l'étape i) est réalisée en la présence d'oxygène de l'air.

5. Procédé selon l'une quelconque des revendications 1 à 4, **caractérisé en ce que** l'étape i) est réalisée à une température de 350 à 650 °C.

6. Procédé selon l'une quelconque des revendications 1 à 5, **caractérisé en ce que** l'étape i) est réalisée à une pression de 70 à 350 mbar.

7. Procédé selon l'une quelconque des revendications 1 à 6, **caractérisé en ce que** la condensation à l'étape ii) a lieu par refroidissement du mélange de produits formé à l'étape i) à une température de 10 à 150 °C.
